Europäisches Patentamt

European Patent Office

Office européen des brevets

(19)

(11) Publication number: **0 377 755**
**A1**

(12)

# EUROPEAN PATENT APPLICATION
## published in accordance with Art. 158(3) EPC

(21) Application number: **89907822.4**

(22) Date of filing: **30.06.89**

(86) International application number:
**PCT/JP89/00660**

(87) International publication number:
**WO 90/00108 (11.01.90 90/02)**

(51) Int. Cl.5: **B25J 9/22, B25J 13/06,**
**B25J 19/04, B23K 9/12**

(30) Priority: **30.06.88 JP 160650/88**

(43) Date of publication of application:
**18.07.90 Bulletin 90/29**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **ITO, Takayuki,Fanuc Dai-3**
**Vira-karamatsu**
**3527-1,**
**Shibokusa,Oshino-mura,Minamitsuru-gun**
**Yamanashi 401-05(JP)**
Inventor: **KOSAKA, Tetsuya,Fanuc Dai-3**
**Vira-karamatsu**
**3527-1,**
**Shibokusa,Oshino-mura,Minamitsuru-gun**
**Yamanashi 401-05(JP)**

(74) Representative: **Billington, Lawrence Emlyn et**
**al**
**HASELTINE LAKE & CO Hazlitt House 28**
**Southampton Buildings Chancery Lane**
**London WC2A 1AT(GB)**

(54) **VISUAL CONTROL ROBOT SYSTEM.**

(57) This invention relates to a visual control robot system for arc welding which can conduct easily and efficiently those operations which are associated with a robot controller and a vision sensor system by an operator through a common operation panel. Before the start of welding, a soft key (9a) disposed on the common operation panel (6) for both the robot controller (5) and vision sensor controller (3) is operated so as to set the robot system to a first mode and under this state, the position of a sample welding member is taught to the robot controller. The soft key is then operated to switch an operation mode to a second mode in order to input parameters for vision teaching of storing a camera image at each point on a reference weld line formed on the sample weld member. The position teaching and the vision teaching can be given via the same operation panel and moreover, the operation common to both can be carried out by the same operation. Correction control is effected during the welding work so that an actual weld line is in agreement with the reference weld line in accordance with the result of comparison

between an actual camera image representing a welding state and a camera image at the time of vision teaching corresponding to the former.

- 1 -

# S P E C I F I C A T I O N
## VISUALLY CONTROLLED ROBOT SYSTEM
### Technical Field

The present invention relates to a visually controlled robot system in which a robot control device and a vision sensor system can be individually operated through a common operator panel.

### Background Art

There have been known visually controlled robot systems operated in accordance with visual information detected by a vision sensor. As a typical example, in visually controlled robots for arc welding, slit light is radiated from a laser beam projector of the vision sensor to a member to be welded, and a slit image is detected by a semiconductor camera of the vision sensor. During a welding process, a vision sensor controller of the robot determines the position of an actual weld line by analyzing the slit image and detects a deviation of the actual weld line from a reference weld line formed on a sample weld member for vision teaching, and the robot control device performs a correction in accordance with the detected deviation so that the actual weld line and the reference weld line coincide, while carrying out an arc welding.

Here, the vision teaching denotes a process of storing camera pictures obtained with a laser beam sequentially radiated to a plurality of points on the reference weld line formed beforehand on the sample weld member when a welding operation is stopped, in the vision sensor controller in relation to robot operated positions. The slit images in the camera pictures obtained at the individual points on the weld line of the sample weld member exhibit characteristic portions representing the position of the weld line. For example, in the case of a lap joint, the slit image contains a disconnected portion as a characteristic portion, and in the case of a fillet welded joint, the slit image contains a bent point as a characteristic portion. Thus, the characteristic portions of the slit images in a plurality of camera pictures cooperatively indicate the reference weld line.

When carrying out a vision teaching, the operator must input various parameters for the vision teaching to the vision sensor controller. Therefore, conventionally, an operator panel used exclusively for the robot control device to teach actions to the robot and an operator panel used exclusively for the arc vision sensor system are separately provided. Accordingly, the operator must be skilled in the operation of these two operator panels and must operate the panels alternately, suffering a laborious and inefficient operation.

### Disclosure of the Invention

An object of the present invention is to provide a visually controlled robot system which permits an operator to easily and efficiently carry out operations individually related to a robot control device and a vision sensor system through a common operator panel.

To achieve the above object, according to the invention, there is provided a visually controlled robot system comprising a robot control device for controlling an operation of a robot body, a vision sensor system for detecting visual information, and a common operator panel having means for selecting one of a first mode for carrying out an operation related to the robot control device and a second mode for carrying out an operation related to the vision sensor system, to carry out the operations.

- 3 -

According to the present invention, operations individually related to the robot control system and vision sensor system of the visually controlled robot system can be carried out through the common operator panel, and therefore, the operator can easily perform an operation related to the robot control device and an operation related to the vision sensor system by simply switching the operation modes of the robot system, using the only one operator panel, whereby the operating efficiency is improved. Furthermore, the operator can easily get skilled in the manipulation of the operator panel.

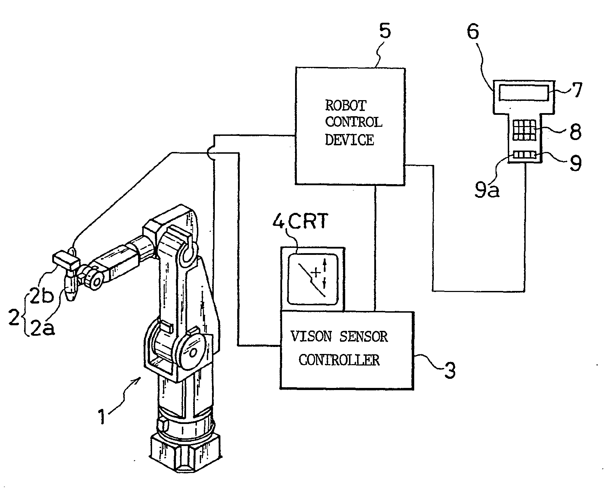

Brief Description of the Drawing

The single figure is a diagram showing, partly in blocks, a visually controlled robot system for arc welding according to an embodiment of the invention.

Best Mode of Carrying Out the Invention

In the figure, a visually controlled robot system for arc welding comprises a robot body 1, and a welding torch 2a and an arc vision sensor 2b, which are mounted to a wrist portion 2 of the robot 1. The vision sensor 2b constitutes an arc vision sensor system in cooperation with an arc vision sensor controller 3 having a CRT display 4, and is provided with a laser beam projector including a laser oscillator, and a semiconductor camera (none of them are shown). The welding torch 2a and the projector and camera of the sensor 2b are always in a predetermined positional relationship relative to one another. The robot body 1 is provided with servomotors (not shown) serving as means for driving individual axes of the robot, and various internal sensors (not shown) for detecting the operated positions of the servomotors for the individual axes. The servomotors and the internal

- 4 -

sensors are connected to a robot control device 5 comprising, e.g., a numerical control device.

The robot system is further provided with an operator panel 6, which is connected to the robot control device 5 and also connected through the control device 5 to the arc vision sensor controller 3 such that various operations individually related to the control device 5 and the vision sensor system can be carried out through the common operator panel 6. Namely, the robot system is operable in various modes including a first mode for carrying out an operation related to the robot control device 5 and a second mode for carrying out an operation related to the arc vision sensor system (more specifically, the arc vision sensor controller 3), and the operator panel 6 is provided with means for selecting one of these modes. Specifically, the operator panel 6 comprises a liquid-crystal display section 7, various keys/buttons 8 including cursor keys and ten-key pad, and a plurality of software keys 9. The software keys 9 have different functions in different modes of the robot system, whereby a large number of functions can be executed. For example, a predetermined software key 9a is designed to function as the aforementioned mode selection means when the robot system is powered. Moreover, the robot system is constructed such that operations common to both the first and second modes (e.g., an operation for moving the cursor on the screens of the CRT display 4 and the liquid-crystal display section 7, etc.) can be executed by operating the keys/buttons of the operator panel 6 in the same manner.

Now, the operation of the arc welding robot system constructed as above will be described.

In the robot system, teaching of the position of a weld member, teaching of welding conditions, vision teaching, and an actual welding process are executed in the order mentioned.

First, the operator sets a sample weld member on a jig (neither is shown) and turns on the power of the robot system. Upon application of the power, the arc vision sensor controller 3 causes the liquid-crystal display section 7 of the operator panel 6 to display a mode selection screen. In this screen, various functions imparted to the respective software keys 9 at the time of the mode selection are displayed. The operator operates the predetermined software key 9a which then functions as the mode selection means, to select the first mode for carrying out an operation related to the robot control device 5.

Next, by pressing the various keys/buttons 8 of the operator panel 6, the operator manually operates the robot body 1 through the robot control device 5 to teach the position of the sample weld member (specifically, the operated positions of the servomotors for the individual axes detected by the internal sensors) to the robot control device 5. Then, the operator carries out a tentative welding on the sample weld member, and sets the resultant proper welding conditions obtained in the robot control device 5.

Subsequently, to carry out the vision teaching, the operator presses the software key 9a of the operator panel 6 to display the mode selection screen at the liquid-crystal display section 7, and selects the second mode for carrying out an operation related to the arc vision sensor system. In accordance with this mode selection, the arc vision sensor controller 3 sequentially displays messages questioning about the vision teaching, at the liquid-crystal display section 7. The operator presses the keys/buttons 8 of the operator panel 6 in answer to the questions, to thereby set parameters relating to the vision teaching, such as a region for image analysis on the screen of the CRT display 4, a type of a joint, an image acquisition interval, etc.

In accordance with the vision teaching parameters thus set, the vision sensor controller 3 cooperates with the robot control device 5 to carry out a vision teaching operation. At the time of the vision teaching, a welding process is stopped. When the vision teaching is carried out, the robot control device 5 controls the operation of the robot body 1 in accordance with the teaching on the position of the aforesaid sample weld member, such that the welding torch 2a attached to the wrist portion 2 of the robot body 1 is moved along the reference weld line formed on the sample weld member. During this time, slit light with a linear section extending in the direction of traversing the weld line of the sample weld member is radiated from the laser beam projector of the vision sensor 2b toward the sample weld member, and a slit image (a V-shaped bent line, if the sample weld member is a fillet welded joint) is detected by the semiconductor camera of the sensor 2b. The slit image is displayed on the screen of the CRT display 4 associated with the vision sensor controller 3 connected to the semiconductor camera. The vision sensor controller 3 reads camera pictures including the slit images into a storage device incorporated therein at predetermined intervals of time (corresponding to a distance of 2 to 50 mm on the weld line) and in

- 7 -

relation to the position and orientation of the wrist portion 2 of the robot body 1.

As mentioned above, during individual operations in the first and second modes, the operator carries out a necessary operation by using only the operator panel 6 common to these modes, and operations common to these two modes are effected by operating the keys/buttons of the operator panel 6 in the same manner, whereby even an unskilled person can easily and efficiently carry out an operation in these two modes.

After the above-described various operations are finished, the operator sets a weld member which is to be actually welded, and operates the operator panel 6 to put the robot system in a welding operation mode, thereby starting a welding process.

During an arc welding process, the robot control device 5 controls the position and orientation of the wrist portion 2 of the robot body 1 (i.e., the position and orientation of the welding torch 2a) in accordance with the teaching on the position of the aforesaid sample weld member, read from the built-in storage device, and carries out a welding under the proper welding conditions determined in the aforesaid manner. In this welding process, slit light is radiated from the laser beam projector of the vision sensor 2b toward the weld member, as in the vision teaching process, whereby a current welded state is imaged by the camera of the sensor 2b and displayed on the CRT screen. The vision sensor controller 3 reads the camera picture when the welding torch 2a reaches each of predetermined points on the weld line, and also reads out a camera picture whose torch position corresponds to that of the currently read picture, from among the camera pictures stored in the built-in storage device at the time of

- 8 -

the vision teaching. Next, the vision sensor controller 3 carries out an image analysis on each of the two camera pictures and extracts characteristic portions of the slit images contained the camera pictures which represent the weld line (e.g., a bent point of the V-shaped bent line if the weld member is a fillet welded joint). Then, the controller 3 calculates the magnitude of the on-screen deviation between the characteristic portions of the two camera pictures, and calculates the actual dimensions (correction amounts) of the deviation between the reference weld line used at the vision teaching and the actual weld line for the welding process, based on the calculated magnitude value and a scale factor determined in accordance with the known distances between the laser beam projector and the camera and between the projector and the welding member. The deviation of position is caused by a setting error of a workpiece, shifting of the position of the workpiece during a welding process, etc. The vision sensor controller 3 then sends the aforesaid correction amounts to the robot control device 5, and in accordance with the correction amounts, the robot control device 5 carries out a real-time correction of the weld path. This correction is effected at each of the points on the weld line, whereby arc welding can be carried out with accuracy.

- 9 -

# C L A I M S

1. A visually controlled robot system comprising:

a robot control device for controlling an operation of a robot body;

a vision sensor system for detecting visual information; and

a common operator panel having means for selecting one of a first mode for carrying out an operation related to said robot control device and a second mode for carrying out an operation related to said vision sensor system, to carry out said operations.

2. A visually controlled robot system according to claim 1, wherein said vision sensor system includes a vision sensor for imaging at least a subject of work, and a vision sensor controller for analyzing a picture signal from said vision sensor, said vision sensor controller being connected to said operator panel.

3. A visually controlled robot system according to claim 1, wherein an operation common to said first and second modes is executed through an identical operation of the operator panel by an operator.

4. A visually controlled robot system according to any one of claims 1 to 4, wherein a welding torch is mounted to said robot body to carry out arc welding.

ROBOT
CONTROL
DEVICE

5

6

7

8

9

9a

4 CRT

VISON SENSOR
CONTROLLER

3

2b

2

2a

1

# INTERNATIONAL SEARCH REPORT

International Application No  PCT/JP89/00660

**I. CLASSIFICATION OF SUBJECT MATTER** (if several classification symbols apply, indicate all) 6

According to International Patent Classification (IPC) or to both National Classification and IPC

Int. Cl$^4$     B25J9/22, B25J13/06, B25J19/04, B23K9/12

**II. FIELDS SEARCHED**

| Minimum Documentation Searched 7 | |
|---|---|
| Classification System | Classification Symbols |
| IPC | B25J9/22, 13/06, 19/04 |

Documentation Searched other than Minimum Documentation
to the Extent that such Documents are Included in the Fields Searched 8

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 57-62869 (Mitsubishi Electric Corporation) 16 April 1982 (16. 04. 82) Page 1, lower left column, lines 5 to 13 (Family : none) | 1, 4 |
| A | JP, A, 57-89583 (Tokico Ltd.) 3 June 1982 (03. 06. 82) Page 1, lower left column, lines 5 to 11 (Family : none) | 2, 4 |
| A | JP, A, 57-109576 (Kawasaki Heavy Industries, Ltd.) 8 July 1982 (08. 07. 82) & GB, A, 2,087,107 & DE, A, 3,144,843 & FR, A, 2,493,744 & SE, A, 8,106,670 & US, A, 4,380,696 & CA, A, 1,168,314 & GB, B, 2,087,107 & SE, B, 449,313 | 2, 4 |
| A | JP, A, 58-44972 (SRI International) 16 March 1983 (16. 03. 83) & GB, A, 2,104,652 & DE, A, 3,228,014 | 2, 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 15, 1989 (15. 09. 89) | October 2, 1989 (02. 10. 89) |
| International Searching Authority | Signature of Authorized Officer |
| Japanese Patent Office | |

Form PCT/ISA/210 (second sheet) (January 1985)